# EUROPÄISCHE PATENTANMELDUNG

(11) **EP 1 344 596 A2**
(43) Veröffentlichungstag der Anmeldung: **17.09.2003**
(21) Anmeldenummer: 03005382.1
(22) Anmeldetag: 13.03.2003
(51) Int. Cl.: B23K 3/08, B05C 17/00, A61C 13/08

(54) **Leitfähigkeitsstift**

(30) Priorität: 15.03.2002 DE 20204442 U
(71) Anmelder: Wieland Dental + Technik GmbH & Co. KG, 75179 Pforzheim (DE)
(72) Erfinder: Schütt, Andreas, 75242 Neuhausen (DE)
(74) Vertreter: Patentanwälte Ruff, Wilhelm, Beier, Dauster & Partner

(57) **Zusammenfassung**

2.1 Ein Leitfähigkeitsstift zum Aufbringen eines leitfähigen Materials auf eine Oberfläche ist bekannt.
2.2 Erfindungsgemäß weist der Leitfähigkeitsstift einen Vorratsbehälter, der mit dem leitfähigen Material befüllt ist, eine Austrageinrichtung für das leitfähige Material, die mit dem Vorratsbehälter verbunden oder verbindbar ist sowie eine mit dem leitfähigen Material benetzbare und/oder tränkbare Spitze auf.
2.3 Anwendung für Dentaltechnik

## Beschreibung

Die Erfindung betrifft einen Leitfähigkeitsstift zum Aufbringen eines leitfähigen Materials auf eine Oberfläche.

Sogenannte Leitfähigkeitsstifte sind aus der Elektronikbranche bekannt. Sie dienen dazu, nicht verbundene Leiterbahnen nachträglich durch Aufbringen eines leitfähigen Materials, beispielsweise Leitsilber, miteinander zu verbinden. Für den Austritt des leitfähigen Materials besitzen solche Stifte an der Stirnseite eine kleine Öffnung, die durch einen kleinen eingesetzten Stift verschlossen ist. Setzt man den Leitfähigkeitsstift auf der Oberfläche auf, wird der kleine Zylinderstift in das Innere des Leitfähigkeitsstifts gedrückt und gibt die Öffnung mindestens teilweise frei. Durch starkes Pressen der flexibel ausgebildeten Wandung des Leitfähigkeitsstifts wird dann das leitfähige Material durch die Öffnung hindurch auf die Oberfläche ausgepreßt. Derartige Leitfähigkeitsstifte sind schwierig handhabbar und nur für das Aufbringen von punktförmigen oder strichförmigen leitfähigen Bereichen geeignet.

Auch in der Dentaltechnik ist das Aufbringen leitfähiger Materialien auf Oberflächen notwendig und bekannt. So müssen bei der galvanischen Herstellung von Zahnersatz, dem sogenannten Galvanoforming, Modelle, die die Mundsituation eines Patienten wiedergeben und aus elektrisch nicht leitendem Material (z. B. Gips) gefertigt sind, leitfähig gemacht werden. Auch vorgeformte Dentalteile aus elektrisch leitendem Material werden häufig zusätzlich mit einer weiteren Schicht aus leitfähigem Material versehen. Dabei dient diese Schicht quasi als Abstandhalter zwischen dem vorgeformten Teil und dem galvanisch darauf aufgebrachten zweiten Teil, um das zweite Teil vom ersten Teil abnehmen zu können und gleichzeitig eine gute Passung beider Teile zu erreichen.

In der Dentaltechnik handelt es sich bei dem leitfähigen Material meist um einen sogenannten Leitsilberlack. Dies ist eine Mischung bzw. Aufschlämmung von Silberteilchen, meist sogenannten Silberflakes, in einem Gemisch organischer Lösungsmittel. Dieser Leitsilberlack wird dem Zahntechniker entweder fertig geliefert oder von diesem aus einem konzentrierten Gemisch und einem sogenannten Verdünner selbst hergestellt. Der Verdünner dient auch dazu, aus der fertigen Mischung verdunstetes Lösungsmittel zu ersetzen.

Das Aufbringen des Leitsilberlacks erfolgt in der Regel mit Hilfe spezieller Pinsel. Da bei der aufgebrachten Leitsilberlackschicht keine oder möglichst wenig Pinselstriche, die sich bei der galvanisch abgeschiedenen Metallschicht negativ bemerkbar machen können, sichtbar sein sollen, erfordert das Aufpinseln des Leitsilberlacks zum einen Erfahrung. Zum anderen ist die Qualität der Leitsilberlackschicht von der Konsistenz des Leitsilberlacks abhängig. Diese liegt jedoch im Verantwortungsbereich des Anwenders und kann vom Hersteller nur bedingt beeinflußt werden.

Um die Anwendbarkeit und damit die Qualität der Leitsilberlackschichten zu verbessern, gibt es für den Dentalmarkt ein Gerät, mit dem die Silberpartikel mit Hilfe einer Pumpe auf die Oberfläche aufgesprüht werden. Auch die Verwendung dieses Geräts, das in seiner Anschaffung vergleichsweise teuer ist, erfordert Erfahrung. Außerdem geht natürlich leitfähiges Material durch den sogenannten Overspray verloren.

Die Erfindung stellt sich dementsprechend die Aufgabe, einen neuen Weg für das Aufbringen von leitfähigem Material auf Oberflächen, insbesondere in der Dentaltechnik, zu eröffnen. Dabei soll zum einen eine kostengünstige Alternative zu den bisherigen Vorgehensweisen und Geräten bereitgestellt werden. Zum anderen sollen in einfacher Weise qualitativ hochwertige Schichten aus leitfähigem Material auf solchen Oberflächen hergestellt werden können.

Diese Aufgabe wird gelöst durch den Leitfähigkeitsstift mit den Merkmalen des Anspruchs 1. Bevorzugte Ausführungen dieses Stiftes sind in den abhängigen Ansprüchen 2 bis 11 beschrieben. Anspruch 12 betrifft einen Satz von erfindungsgemäßen Stiften. Der Wortlaut sämtlicher Ansprüche wird hiermit durch Bezugnahme zum Inhalt dieser Beschreibung gemacht.

Der erfindungsgemäße Leitfähigkeitsstift besitzt einen Vorratsbehälter, der mit dem leitfähigen Material befüllt ist, und eine Austrageinrichtung bzw. einen Austragteil für das leitfähige Material. Diese Austrageinrichtung ist mit dem Vorratsbehälter verbunden oder mit diesem verbindbar und weist eine Spitze auf, die mit dem leitfähigen Material benetzbar und/oder tränkbar ist.

Die Ausgestaltung des erfindungsgemäßen Leitfähigkeitsstifts resultiert darin, daß sich auf der Oberfläche, insbesondere auf der Oberfläche eines Dentalmodells, in einfacher Weise eine leitfähige Schicht aufbringen, z. B. "aufmalen" läßt. Die aus dem Stand der Technik bekannten Stifte aus der Elektronikbranche sind für das Herstellen solcher flächigen Schichten nicht vorgesehen und geeignet. Bei den erfindungsgemäßen Stiften kann der Hersteller die Qualität der erhaltenen Schichten maßgeblich beeinflussen, da er sowohl die Austrageinrichtung mit der besonderen Spitze als auch das sich im Vorratsbehälter befindende leitfähige Material zur Verfügung stellt. Durch Auswahl der Spitze (z. B. Material, Breite usw.) und Auswahl der Zusammensetzung des leitfähigen Materials kann er dem Anwender für alle Bedarfsfälle den geeigneten Stift an die Hand geben.

Die bereits erwähnte benetzbare und/oder tränkbare Spitze ist vorzugsweise ausreichend verformbar bzw. ausreichend weich, um sich zum einen an den Verlauf der zu beschichtenden Oberfläche anzupassen und zum anderen eine Beschädigung dieser Oberfläche zu vermeiden. Vorzugsweise handelt es sich bei der Spitze um eine sogenannte Faserspitze, wie sie bei den sogenannten Faserschreibern (z. B. von der Firma Edding, Deutschland) verwendet werden.

Das im Vorratsbehälter enthaltene leitfähige Material enthält vorzugsweise mindestens ein Metall, das insbesondere in Form sogenannter Flakes vorliegt. Derartige Flakes sind dem Fachmann bekannt und finden in der Technik häufig Verwendung, beispielsweise auch in sogenannten Metallic-Lacken. Vorzugsweise findet als Metall ein Edelmetall Verwendung. Unter diesen ist wiederum Silber bevorzugt.

In Weiterbildung enthält das leitfähige Material mindestens ein organisches Lösungsmittel, insbesondere mindestens einen Alkohol. Dementsprechend ist als leitfähiges Material eine Mischung/Aufschlämmung aus mindestens einem Metall in mindestens einem organischen Lösungsmittel bevorzugt. Besonders zu nennen sind hier Mischungen der organischen Lösungsmittel Ethoxypropanol, Ethanol und Aceton, wobei die Erfindung selbstverständlich nicht auf die Verwendung dieser Lösungsmittel beschränkt ist. Aus dem soeben beschriebenen geht hervor, daß die Art und Zusammensetzung des leitfähigen Materials für die Erfindung letzten Endes nicht kritisch ist. Üblicherweise wird es sich bei dem leitfähigen Material um einen sogenannten Leitsilberlack handeln, wie er in der Dentaltechnik bereits umfangreich benutzt wird.

Aus den obigen Schilderungen ergibt sich, daß das leitfähige Material im Regelfall fließfähig sein wird. Es kann dabei in Form einer Lösung, einer Suspension, einer Aufschlämmung oder dergleichen vorliegen. Dabei ist es grundsätzlich möglich, daß die für den eigentlichen Austrag verantwortliche Spitze, die mit dem leitfähigen Material benetzt und/oder getränkt ist, mit dem Vorratsbehälter ständig in Verbindung steht. Es ist jedoch auch möglich und bevorzugt, wenn diese Verbindung nur beim Austrag selbst hergestellt wird. Zu diesem Zweck kann bei bevorzugten Ausführungsformen der Erfindung ein Ventil oder ein vergleichbar wirkendes Bauelement vorgesehen sein, das üblicherweise zwischen dem Vorratsbehälter und der Austrageinrichtung angeordnet ist. Über ein geeignetes Betätigungselement wird dann das Ventil beim Austragen des leitfähigen Materials geöffnet und anschließend wieder geschlossen. Bei einer üblichen bevorzugten Ausführung kann diese Ventilwirkung dadurch realisiert werden, daß das Ventil bzw. die als Ventil wirkende Konstruktion durch Aufdrücken der Spitze auf die zu beschichtende Oberfläche geöffnet wird. Durch Beenden des Aufdrückens wird das Ventil dann wieder geschlossen.

Wie bereits erwähnt umfaßt die Erfindung auch einen Satz von Leitfähigkeitsstiften, die erfindungsgemäß ausgebildet sind. Dieser Satz kann beispielsweise aus mehreren Stiften bestehen, die eine unterschiedlich ausgestaltete Spitze besitzen. Diese Unterschiede können beispielsweise in der unterschiedlichen Verformbarkeit oder der unterschiedlichen Breite dieser Spitzen liegen.

Der Vollständigkeit halber läßt sich die Erfindung auch als Verwendung eines Stifts zum Aufbringen eines leitfähigen Materials auf eine Oberfläche beschreiben. Dieser Stift weist dabei einen Vorratsbehälter, der mit dem leitfähigen Material befüllt ist, sowie eine Austrageinrichtung für das leitfähige Material auf. Diese Austrageinrichtung ist mit dem Vorratsbehälter verbunden oder verbindbar und weist eine mit dem leitfähigen Material benetzbare und/oder tränkbare Spitze auf.

Bezüglich der bevorzugten Ausgestaltungen des verwendeten Stifts wird auf die bisherige Beschreibung verwiesen und ausdrücklich Bezug genommen. Bei der zu beschichtenden Oberfläche handelt es sich vorzugsweise um die Oberfläche eines dentalen Formteils oder Modells, wie es zur insbesondere galvanischen Herstellung von Zahnersatz benötigt wird. Diese Oberfläche kann dabei aus mindestens einem Metall, vorzugsweise aus einem Edelmetall wie Gold, bestehen. Es ist jedoch bevorzugt, wenn die Oberfläche des dentalen Formteils oder Modells aus nicht leitendem Material, insbesondere aus sogenanntem Dentalgips, besteht.

Weitere Vorteile und Merkmale ergeben sich aus den Ansprüchen und der nachfolgenden Beschreibung einer bevorzugten Ausführungsform der Erfindung, die anhand der Zeichnungen dargestellt ist.

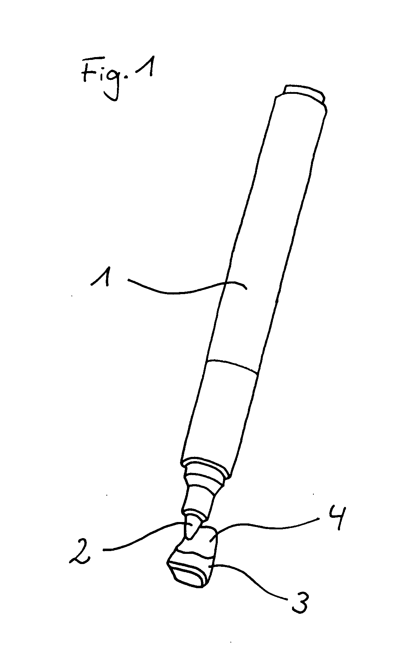

- Fig. 1: zeigt in perspektivischer Darstellung einen Leitfähigkeitsstift an einem Zahnstumpfmodell,
- Fig. 2: in perspektivischer Darstellung eine Detaildarstellung einer Spitze eines Leitfähigkeitsstiftes.

Ein Leitfähigkeitsstift 1 weist einen Vorratsbehälter in Form einer stirnseitig verschlossenen zylindrischen Hülse auf, wobei die Hülse an einem der verschlossenen Stirnseite gegenüberliegenden Ende eine mit einem nicht dargestellten Ventil verschließbare Öffnung aufweist. Dem Ventil unmittelbar benachbart ist ein nicht näher dargestelltes Ende einer als Austrageinrichtung wirkenden Faserspitze 2, die in einer Führungshülse gehalten ist und an einer dem Ventil abgewandten Seite eine verjüngte Kontur aufweist. Die Faserspitze 2 ist derartig mit dem Ventil verbunden, dass bei einem Aufdrücken der Faserspitze 2 auf einen Untergrund das Ventil geöffnet wird und ein im Vorratsbehälter gespeichertes Leitfähigkeitsmedium 8 an die Faserspitze 2 abgegeben wird.

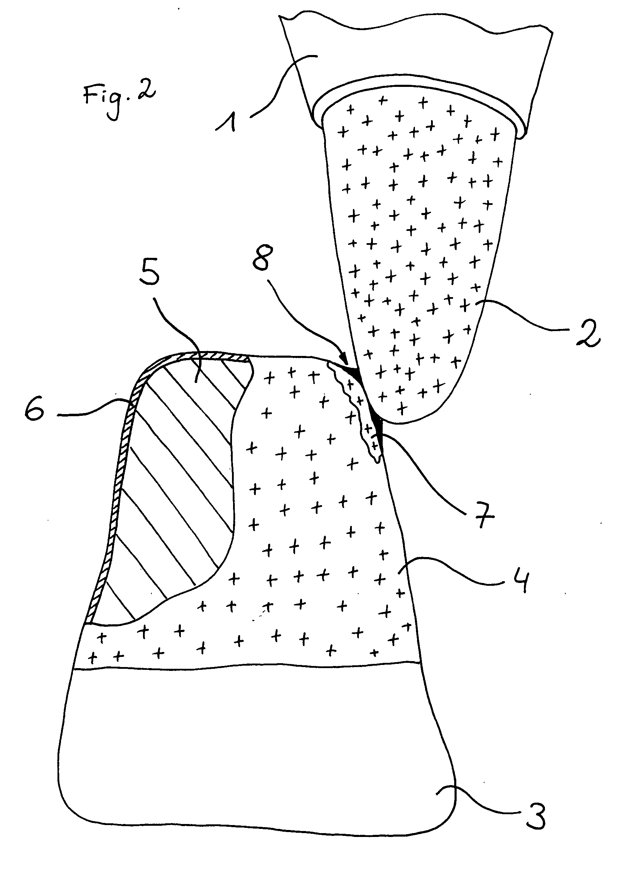

Das Leitfähigkeitsmedium 8 besteht aus einem Gemisch von Metallflakes, wie sie in Fig. 2 schematisch dargestellt sind und einem Lösungsmittel. Durch die Kapillarwirkung der Faserspitze 2 wird das Leitfähigkeitsmedium 8 in den verjüngten Bereich transportiert und kann dort auf die Oberfläche eines Zahnstumpfs 3 abgegeben werden. Dabei wird während des Auftragvorgangs ein Flüssigkeitsmeniskus ausgebildet, der in Verbindung mit einer entsprechend gewählten Konsistenz des Leitfähigkeitsmediums 8 eine homogene Verteilung des Leitfähigkeitsmediums 8 auf der Oberfläche des Zahnstumpfs 3 bewirkt.

Dabei ist das Lösungsmittel so gewählt, das das frisch auf den Zahnstumpf 3 aufgetragene Leitfähigkeitsmedium 8 ein leitende Verbindung mit bereits aufgetragenen Metallflakes eingeht. Anschließend verdunstet das Lösungsmittel und lässt eine homogene Matellflakeschicht 6 zurück, die mit der Abdruckmasse 5 des Zahnstumpfes 3 eine Haftverbindung eingeht. Durch den mechanischen Kontakt der Faserspritze 2 mit dem Zahnstumpf 3 ist eine Nivellierungswirkung verbunden, die auch bei mehrmaligen Auftrag des Leitfähigkeitsmediums an einer Stelle eine im wesentlichen homogene Schichtdicke der Metallflakesschicht 6 sicherstellt.

## Patentansprüche

1. Leitfähigkeitsstift zum Aufbringen eines leitfähigen Materials auf eine Oberfläche mit einem Vorratsbehälter, der mit dem leitfähigen Material befüllt ist, und einer Austrageinrichtung für das leitfähige Material, die mit dem Vorratsbehälter verbunden oder verbindbar ist und eine mit dem leitfähigen Material benetzbare und/oder tränkbare Spitze aufweist.

2. Leitfähigkeitsstift nach Anspruch 1, **dadurch gekennzeichnet, daß** die Spitze verformbar ausgebildet ist.

3. Leitfähigkeitsstift nach Anspruch 1 oder Anspruch 2, **dadurch gekennzeichnet, daß** er als sogenannter Faserstift mit einer Faserspitze ausgebildet ist.

4. Leitfähigkeitsstift nach einem der vorhergehenden Ansprüche, **dadurch gekennzeichnet, daß** das leitfähige Material mindestens ein Metall, vorzugsweise in Form sogenannter Flakes, enthält.

5. Leitfähigkeitsstift nach Anspruch 4, **dadurch gekennzeichnet, daß** es sich bei dem Metall um ein Edelmetall handelt.

6. Leitfähigkeitsstift nach Anspruch 5, **dadurch gekennzeichnet, daß** es sich bei dem Metall um Silber handelt.

7. Leitfähigkeitsstift nach einem der vorhergehenden Ansprüche, **dadurch gekennzeichnet, daß** das leitfähige Material mindestens ein organisches Lösungsmittel, vorzugsweise mindestens einen Alkohol, enthält.

8. Leitfähigkeitsstift nach Anspruch 7, **dadurch gekennzeichnet, daß** das leitfähige Material aus einem Gemisch von mindestens einem Metall in mindestens einem organischen Lösungsmittel besteht.

9. Leitfähigkeitsstift nach Anspruch 8, **dadurch gekennzeichnet, daß** das leitfähige Material aus einem Gemisch von mindestens einem Metall, vorzugsweise Silber, und Ethoxypropanol, Ethanol sowie Aceton besteht.

10. Leitfähigkeitsstift nach einem der vorhergehenden Ansprüche, weiter **gekennzeichnet durch** mindestens ein Ventil zur Verbindung der Austrageinrichtung mit dem Vorratsbehälter.

11. Leitfähigkeitsstift nach Anspruch 10, **dadurch gekennzeichnet, daß** das Ventil derart ausgestaltet oder angeordnet ist, daß es beim Aufdrücken der Spitze auf die Oberfläche öffnet und bei Beenden des Andrückens wieder schließt.

12. Satz von Leitfähigkeitsstiften, **dadurch gekennzeichnet, daß** er mindestens einen Leitfähigkeitsstift nach einem der vorhergehenden Ansprüche enthält.
